# EUROPEAN PATENT APPLICATION

(11) **EP 1 841 129 A1**
(43) Date of publication of application: **03.10.2007**
(21) Application number: 06006903.6
(22) Date of filing: 31.03.2006
(51) Int. Cl.: H04L 12/18

(54) **Mobile terminal controlled service delivery selection for multicast services**

(71) Applicant: MATSUSHITA ELECTRIC INDUSTRIAL CO., LTD, Kadoma-shi, Osaka 571-8501 (JP)
(72) Inventor: Gonsa, Osvaldo, Dr., 63225 Langen (DE); Becker, Ralf, 63225 Langen (DE); Hakenberg, Rolf, 63225 Langen (DE)
(74) Representative: Grünecker, Kinkeldey, Stockmair & Schwanhäusser Anwaltssozietät

(57) **Abstract**

The invention relates to method for providing a multicast service from or via an application server to a mobile terminal within a mobile communication system, wherein the mobile communication system provides a downlink multicast or broadcast service (DMBS) that can be utilized for transmitting the downlink multicast data to the mobile terminal. Further, the invention relates to a mobile terminal and network entities that participate in this method. To enable an efficient provision of a bidirectional multicast service to users, wherein a DMBS may be used for providing downlink multicast data to the users, the invention proposes that the mobile terminal requests an application server to route downlink multicast data through the resources established for the multicast service instead of the resources for the DMBS, upon receiving a notification that a point-to-point connection is to be used for the downlink multicast data transfer. Thereby, the establishment of additional RAN resources for DMBS can be prevented.

## Description

### FIELD OF THE INVENTION

The invention relates to method for providing a multicast service from or via an application server to at least one mobile terminal within a mobile communication system, wherein the mobile communication system provides a downlink multicast or broadcast service that can be utilized for transmitting the downlink data of the multicast service to the mobile terminal. Further, the invention relates to a mobile terminal and network entities that participate in this method.

### TECHNICAL BACKGROUND

Mobile communication systems, such as the universal mobile telecommunications system (UMTS) can carry both voice and data traffic via fixed, wireless and satellite networks. These communication systems are incessantly evolving, thereby also developing and providing packet frameworks for the delivery of IP based, real-time, conversational or multimedia services. For instance, an IP multimedia subsystem (IMS) standard is specified by the 3rd Generation Partnership Project (3GPP) (see 3GPP TS 23.228, "IP Multimedia Subsystem (IMS); Stage 2 (Release 6)", version 7.2.0, incorporated herein by reference, available from http://www.3gpp.org). IMS is specifically architected to enable and enhance real time, mobile and fixed multimedia mobile services such as rich voices services, video telephony, messaging, conferencing and push services. IMS runs over the standard Internet Protocol (lP) and supports both packet-switched and circuit-switched phone systems.

Typically, multiple users are subscribed to receive IMS services, such as Push to Talk over Cellular (PoC) or Video-conferencing services, which occasionally includes providing the same data to multiple users in a specific cell of a radio network. IMS standards however only support point-to-point (PTP) connections to the mobile terminals (MT) of the users, including the reservation of system resources in the radio access network (RAN) for dedicated radio bearer connectivity to each mobile terminal provided with the service.

In cases where multiple users receive the same service, it can be advantageous to use a multicast capable service with a point-to-multipoint (PTM) capability to transmit the service data to the multiple users. When providing IMS services in an UMTS system, typically, shared or broadcast radio bearers instead of many dedicated radio bearers are utilized to serve multiple users in a radio cell, which may save system resources in the radio access network.

A multicast capable service is for example the Multimedia Broadcast/Multicast Service (MBMS), which has also been standardized by the 3GPP (see 3GPP TS 23.246, "Multimedia Broadcast/Multicast Service (MBMS), Architecture and functional description (Release 6)", version 6.9.0, incorporated herein by reference, available from http://www.3gpp.org). The MBMS service is an example of a downlink multicast or broadcast service for transmitting the same downlink data to a plurality of recipients through a radio network. The recipients typically share one radio channel, a shared radio bearer for the reception of MBMS service data. The MBMS service supports the transmission of multimedia data such as real-time image and voice or text. It may therefore also be used to provide data of IMS services to the users. As the same data is transmitted to many users probably located in different cells, the type of connection, PTP or PTM, used in a cell for a specific mobile terminal of the user may be based on the number of users located in each cell.

In the following, an exemplary setup procedure for such an IMS service using the MBMS service framework for downlink data provision as described in 3GPP TSG-SA WG2 #48, S2-052305, Sophia Antipolis, France 5th - 9th September 2005, "Enable IMS service with multicast capability" (incorporated herein by reference, available at http://www.3gpp.org) is briefly discussed.

First, the user subscribes to an IMS, service by sending an INVITE message of the SIP protocol (Session Initiation Protocol) - or any other session establishing message with similar function - to the service provider (e.g. IMS application server) via the radio access network and the core network. After authorizing the user to receive the service in the UMTS network, the service provider initiates the reservation of system resources in the mobile communication system. This reservation typically includes the setting up of tunnels between a Gateway GPRS support node (GGSN), Service GPRS support node (SGSN) and a radio network controller (RNC) serving the user equipment (UE). The RNC in the URAN is typically controlling radio transmission resources.

Furthermore, a radio bearer between the RNC and the UE is established for the signaling and the uplink connection from the UE to the service provider. For communicating, session setup signaling, session setup and control protocols as SIP (Session Initiation Protocol) or any other application layer signaling protocol providing appropriate functions may be used.

For providing the downlink data to the users, the MBMS service framework is utilized. The setup procedure of the MBMS service can be initiated for example by the IMS service provider. The MBMS setup includes the configuration of system resources for the transmission of the downlink IMS data. Accordingly, this setup typically comprises the establishment of tunnels between GGSN, SGSN and RNC, described by contexts established in the respective network elements (MBMS Bearer Contexts and MBMS UE Contexts) and further comprises the setup of a shared or dedicated radio connection in the RAN, depending on the number of users to receive the IMS service located in a respective radio cell.

For a combined IMS over MBMS service as described above, the system will setup a radio bearer service for IMS and will additionally proceed with activating the MBMS service. This activation will include the setup of GTP tunnels and Radio Access Bearer service for the MBMS service. In the event that the RNC decides for PTP transmission for providing the downlink service data to the UEs using MBMS, the system will setup a dedicated radio bearer service for PTP MBMS data. However, the UE already has a radio bearer active for IMS - which has similar QoS requirements - and that has a downlink channel that will be in-active (IMS downlink) in case that the MBMS service is used.

In summary, if the RNC decides for PTP MBMS transmission for a UE, then it is necessary in the prior art to set up two different PTP Radio Bearer Services for the same UE one for each packet switched (PS) service (i.e. IMS and MBMS) which need mapping to transport and physical channels. This will result in a waste of RAN resources (e.g. orthogonalization codes, spreading codes, etc.) in a IMS-MBMS combined scenario, since the UE already has a radio bearer active (IMS bearer) that is used only for uplink transmissions air link resources.

### SUMMARY OF THE INVENTION

The object of the invention is to enable an efficient provision of a directional multicast service to users in a mobile communication system, wherein a downlink multicast or broadcast service may be used for providing downlink service data of the multicast service to the users.

The object is solved by the subject matter of the independent claims. Advantageous embodiments of the invention are subject matters of the dependent claims.

One main aspect of the invention is to avoid the setup of additional air interface resources between a mobile terminal to receive the multicast service and the radio access network. When providing a multicast service to the users system resources for the multicast service including at least a dedicated connection between the mobile terminal and a radio access network of the mobile communication system for exchanging data of the multicast service are typically established first. It is assumed that the mobile communication system provides a downlink multicast or broadcast service - e.g. MBMS when implementing the invention in a UMTS system - that can be utilized for transmitting the downlink data of the multicast service to the mobile terminal. The idea is to prevent the establishment/reservation of additional air interface resources for the provision of downlink multicast service data through the downlink multicast or broadcast service, in case a point-to-point connection is to be used for their delivery to a mobile terminal receiving the multicast service.

A first embodiment of the invention relates to a method for providing a multicast service from or via an application server to at least one mobile terminal within a mobile communication system. Within the mobile communication system a downlink multicast or broadcast service is provided that can be utilized for transmitting the downlink data of the multicast service to the mobile terminal. According to this embodiment, system resources for the multicast service are established. These resources include at least a dedicated connection between the mobile terminal and a radio access network of the mobile communication system for exchanging data of the multicast service.

The mobile terminal may receive a notification on whether the downlink multicast or broadcast service is to utilize a point-to-point connection or a point-to-multipoint connection for providing downlink data of the multicast service to the mobile terminal from the radio access network. If the mobile terminal is notified that a point-to-point connection is to be utilized, it will request the application server to utilize the established system resources for providing the downlink data of the multicast service to the mobile terminal.

In a further embodiment of the invention the mobile terminal may receive the downlink data of the multicast service through a point-to-multipoint connection from the radio access network utilizing the downlink multicast or broadcast service, if the mobile terminal is notified that a point-to-multipoint connection is to be utilized.

In another exemplary embodiment of the invention the point-to-point and point-to-multipoint connection is an air interface connection.

Further, in another embodiment of the invention the notification received at the mobile terminal is a message of an access stratum protocol. The access stratum protocol may for example be a radio resource control protocol.

In an alternative embodiment, the notification received at the mobile terminal is a message of a non-access stratum protocol.

Moreover, another embodiment foresees that the application server is requested to utilize the established system resources by a non-access stratum protocol message transmitted by the mobile terminal.

In a further embodiment of the invention the transmission of the non-access stratum protocol message may be triggered within the mobile terminal by an access stratum protocol entity receiving the notification through a service access point for exchanging data between non-access stratum protocol and the access stratum protocol.

Another embodiment of the invention relates to the operations performed within the radio access network of the mobile communication system and other core network elements or network elements participating in the multicast service.

This embodiment suggests a method for providing a multicast service from or via an application server to at least one mobile terminal within a mobile communication system. Also in this embodiment the mobile communication system provides a downlink multicast or broadcast service that can be utilized for transmitting the downlink data of the multicast service to the mobile terminal. First, system resources for the multicast service including at least a dedicated connection between the mobile terminal and a radio access network of the mobile communication system for exchanging data of the multicast service may be established.

Further, system resources on a downlink distribution path between the access server and a radio access network of the mobile communication system for providing the downlink data of the multicast service utilizing the downlink multicast or broadcast service to the mobile terminal are established. A network entity of the radio access network may further decide whether the downlink multicast or broadcast service is to utilize a point-to-point connection or a point-to-multipoint connection for providing downlink data of the multicast service to the mobile terminal and may notify the mobile terminal on the decision.

In a further embodiment of the invention the application server may receive a request to utilize the established system resources for the multicast service including the dedicated connection for providing the downlink data of the multicast service to the mobile terminal.

In an exemplary variation of the embodiment the request is received by the application server from the mobile terminal or a network entity of the radio access network, if the network entity of the radio access network decided to utilize a point-to-point connection. In another exemplary variation of the embodiment the request is comprised in a non-access stratum protocol message received by the application server from the mobile terminal.

Another embodiment of the invention foresees to perform a soft-deactivation of the established system resources on the downlink distribution path, if it has been decided to utilize a point-to-point connection. This soft deactivation may for example be triggered by the application server in response to a request of the mobile terminal. During soft deactivation a multicast service context of the mobile terminal within a respective network entity in the downlink distribution path is maintained.

In a further embodiment of the invention the notification of the mobile terminal on whether the downlink multicast or broadcast service is to utilize a point-to-point connection or a point-to-multipoint connection is comprised within an access stratum protocol message transmitted by said network entity of the radio access network.

Another embodiment of the invention provides a mobile terminal within a mobile communication system for receiving a multicast service from or via an application server. The mobile communication system provides a downlink multicast or broadcast service that can be utilized for transmitting the downlink data of the multicast service to the mobile terminal.

The mobile terminal comprises a processing unit for establishing system resources for the multicast service including at least a dedicated connection between the mobile terminal and a radio access network of the mobile communication system for exchanging data of the multicast service. Further, the mobile terminal comprises a receiver for receiving from the radio access network a notification on whether the downlink multicast or broadcast service is to utilize a point-to-point connection or a point-to-multipoint connection for providing downlink data of the multicast service to the mobile terminal, and a transmitter for requesting the application server to utilize the established system resources for providing the downlink data of the multicast service to the mobile terminal, if the mobile terminal is notified that a point-to-point connection is to be utilized.

In a further embodiment, the mobile terminal comprises additional means configured to perform the steps of the method for providing a multicast service from or via an application server to at least one mobile terminal within a mobile communication system.

Another embodiment of the invention relates to a network entity of the radio access network of a mobile communication system for providing multicast service data to at least one mobile terminal within a mobile communication system. Also in this embodiment the mobile communication system provides a downlink multicast or broadcast service that can be utilized for transmitting the downlink multicast service data of a multicast service to the mobile terminal.

The network entity comprises a communication unit and a processing unit for establishing system resources for the multicast service including at least a dedicated connection between the mobile terminal and a radio access network of the mobile communication system for exchanging data of the multicast service. Further, the communication and processing unit can be operated to establish system resources on a downlink distribution path between the access server and the network entity for providing the downlink data of the multicast service utilizing the downlink multicast or broadcast service to the mobile terminal.

Moreover, the processing unit can be operated to decide whether the downlink multicast or broadcast service is to utilize a point-to-point connection or a point-to-multipoint connection for providing downlink data of the multicast service to the mobile terminal. The communication unit can further be operated to notify the mobile terminal on the decision.

A further embodiment of the invention relates to a mobile communication system comprising a mobile terminal according to one of the embodiments of the invention and a network entity of the radio access network according one of the embodiments of the invention.

The mobile communication system according another embodiment of the invention further comprises at least one further network element configured to perform the steps of the method for providing a multicast service from or via an application server to at least one mobile terminal according to one of the various embodiments of the invention described herein.

Further, another embodiment of the invention provides to a computer-readable medium storing instructions that, when executed by a processor of a mobile terminal, cause the mobile terminal to receive a multicast service from or via an application server, by establishing system resources for the multicast service including at least a dedicated connection between the mobile terminal and a radio access network of the mobile communication system for exchanging data of the multicast service, receiving from the radio access network a notification on whether the downlink multicast or broadcast service is to utilize a point-to-point connection or a point-to-multipoint connection for providing downlink data of the multicast service to the mobile terminal, and requesting the application server to utilize the established system resources for providing the downlink data of the multicast service to the mobile terminal, if the mobile terminal is notified that a point-to-point connection is to be utilized.

The computer readable-medium according another embodiment of the invention, further storing instructions that, when executed by the processor of the mobile, cause the mobile terminal to receive the multicast service by performing the steps of the method for providing a multicast service from or via an application server to at least one mobile terminal according to one of the various embodiments of the invention described herein.

A computer-readable medium in a further embodiment of the invention stores instruction that, when executed by a network element of the radio access network of a mobile communication system, cause the network element to provide multicast service data to at least one mobile terminal within a mobile communication system, by establishing system resources for the multicast service including at least a dedicated connection between the mobile terminal and a radio access network of the mobile communication system for exchanging data of the multicast service, establishing system resources on a downlink distribution path between the access server and a radio access network of the mobile communication system for providing the downlink data of the multicast service utilizing the downlink multicast or broadcast service to the mobile terminal, deciding whether the downlink multicast or broadcast service is to utilize a point-to-point connection or a point-to-multipoint connection for providing downlink data of the multicast service to the mobile terminal, and notifying the mobile terminal on the decision.

This computer readable-medium according another embodiment of the invention, further storing instructions that, when executed by the processor of the mobile, cause the mobile terminal to receive the multicast service by performing the steps of the method for providing a multicast service from or via an application server to at least one mobile terminal according to one of the various embodiments of the invention described herein.

### BRIEF DESCRIPTION OF THE FIGURES

In the following the invention is described in more detail in reference to the attached figures and drawings. Similar or corresponding details in the figures are marked with the same reference numerals.
- **Fig. 1**: shows an enhanced UMTS network with a number of users located in different radio cells of the radio access network according to an embodiment of the invention,
- **Fig. 2 & 3**: show the utilization of system resources for a standard IMS over MBMS service and an IMS over MBMS service according to an embodiment of the invention, respectively,
- **Fig. 4 & 5**: shown two exemplary signaling diagrams of a multicast service setup procedure according to different embodiments of the invention,
- **Fig. 6**: shows a signaling diagram of the setup of an IMS over MBMS service according to an embodiment of the invention,
- **Fig. 7**: shows the soft-deactivation of MBMS system resources for a UE according to an exemplary embodiment of the invention,
- **Fig. 8**: shows the reactivation of MBMS system resources upon switching the MBMS delivery mechanism from point-to-point to point-to-multipoint according to an exemplary embodiment of the invention, and

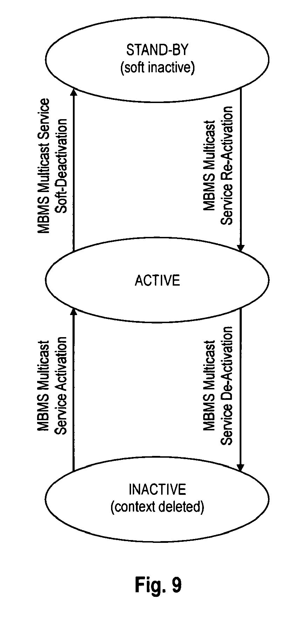

- **Fig. 9**: shows the different states of a MBMS UE Context according to an embodiment of the invention.

### DETAILED DESCRIPTION OF THE INVENTION

The following paragraphs will describe various embodiments of the invention. For exemplary purposes only, most of the embodiments are outlined in relation to an UMTS communication system and the terminology used in the subsequent sections mainly relates to the UMTS terminology. However, the terminology and the description of the embodiments with respect to an UMTS architecture is not intended to limit the principles and ideas of the inventions to such systems.

Also the detailed explanations given in the Technical Background section above are merely intended to better understand the mostly UMTS specific exemplary embodiments described in the following and should not be understood as limiting the invention to the described specific implementations of processes and functions in the mobile communication network.

For a better understanding of the invention, the following terms are defined. A network element may be defined as a physical element of the core network or the radio access network that comprises at least one core network entity or at least one radio access network entity, respectively. A core network entity may be defined as a functional entity of the core network in a mobile communication system. Typically, this functional entity will serve as an entry point for the service data from a service provider and forwards the service data to further entities in the mobile communication system. For example, in a UMTS implementation a network entity could be a Gateway GPRS support node (GGSN) or a Service GPRS support node (SGSN). Moreover, according to other implementations a network entity could be a gateway.

Moreover, a radio access network entity may be defined as a functional entity of the radio access network in the mobile communication system. This entity may for example control radio resources in the radio access network. In a typical UMTS implementation the radio access network entity controlling radio resources could be a Radio Network Controller (RNC) or a Node B, i.e. network elements that are typically responsible for setting up radio bearers to the mobile terminals under their control.

As already indicated above, one of main ideas of the invention is to prevent the establishment/reservation/use of additional air interface resources for providing downlink multicast service data through the downlink multicast or broadcast service to a mobile terminal in case a point-to-point connection is to be used as a connection between mobile terminal and radio access network. Thereby it is assumed that system resources including a point-to-point connection have been established for exchanging multicast service related data.

The configuration or establishment of system resources in the mobile communication system may be typically separated in two parts, the configuration or establishment of system resources between radio access network and mobile terminal and the configuration or establishment of system resources between radio access network and the core network entity serving as the entry point for the service data from a service provider, such as an application server.

In the radio access network this comprises a configuration of a radio bearer and the reservation of radio access network resources for this radio bearer.

Between radio access network and the core network entity serving as the entry point for the service data from a service provider, the establishment or configuration of system resources may include connections between the network entities of the core network and the network entity of the radio access network being the entry point of service data to the radio access network from the core network. Typically, this is accomplished by setting up service related contexts in the individual network entities in the service data distribution path. In a typical UMTS implementation the configured system resources in the core network may comprise tunnels between the SGSN and the GGSN and between the SGSN and the RNC. During the configuration of tunnels in the core network, system resources may or may not be explicitly reserved for the particular tunnels.

According to one exemplary embodiment, the system resource utilization is optimized by informing the mobile terminal on whether a point-to-point or point-to-multipoint connection to the radio access network is to be used for the downlink service data, and the mobile terminal triggering the application server to utilized the initially established resources including the point-to-point connection for providing the downlink data of the multicast service to the mobile terminal. As a result, no additional system resources have to be assigned to the mobile terminal to provide the downlink data through the downlink multicast and broadcast service.

Some embodiments of the invention relate to the implementation of this idea in an UMTS environment as described in the technical background section above that is enhanced. In this embodiment, the multicast service may be an IMS service (e.g. PoC, video or audio streaming, etc.) that may be provided through the UMTS network using MBMS service as a downlink multicast or broadcast service. In this environment, the idea described above may be circumscribed as to enable the UE to choose the delivery medium for the IMS-MBMS session data.

According to this exemplary embodiment, by a notification sent by a network entity in the UTRAN controlling the air interface resources that indicates the type of radio bearer/connection that is going to be used by the MBMS service to deliver the downlink IMS-MBMS session data. For example, this could be accomplished by including the notification in a radio resource control (RRC) protocol message sent by the RNC to the UE.

The UE will select the IMS bearer/connection as delivery medium, if the RNC notifies the UE to acquire a point-to-point radio bearer for the MBMS service. In this case, the UE will send request message to the IMS-AS (IMS-Application Server) to send the downlink data of the service through the dedicated IMS bearer/connection instead of establishing a second dedicated MBMS bearer/connection.

Another aspect of the invention is to allow a fast setup of the downlink multicast or broadcast service to the mobile terminal for downlink service data delivery, for example in case it is later on (i.e. during an ongoing service) decided to switch the downlink data delivery mechanism from point-to-point to point-to-multipoint.

The issue may for example be solved by a soft de-activation of the downlink multicast or broadcast service for a particular mobile terminal or a group of terminals. Soft-deactivation of the system resources established for the downlink multicast or broadcast service means that the system resources of the downlink multicast or broadcast service for a particular mobile terminal or a group of mobile terminals is soft-deactivated.

For example, if there are still mobile terminals in a radio cell that receive the downlink multicast data through the system resources of the downlink multicast or broadcast service, even if some of the mobile terminal in a cell utilize the point-to-point connection of the multicast service, not all system resources of the downlink multicast or broadcast service can be deactivated.

Essentially, the soft deactivation of the downlink multicast or broadcast service may be considered a new state in a state machine used to represent the downlink multicast or broadcast service states.

According to an exemplary embodiment, system resources on a downlink distribution path between the access server and a radio access network of the mobile communication system for providing the downlink data of the multicast service utilizing the downlink multicast or broadcast service to the mobile terminal are initially setup for a mobile terminal or a group of terminals.

On the one hand, if the radio access network decides to utilize a point-to-multipoint connect to deliver the downlink data to a mobile terminal through the downlink multicast and broadcast service, this service start procedure is "finished" in that air interface resources for the point-to-multipoint connection are reserved/configured for delivering the downlink multicast service data through the downlink multicast or broadcast service to the mobile terminal(s).

On the other hand, if a point-to-point connection to deliver the downlink data to a mobile terminal through the downlink multicast and broadcast service no system resources on between radio access network and mobile terminal are established, i.e. no air interface resources for the point-to-point connection need to be reserved/configured. However, the system resources established on downlink distribution path between the access server and a radio access network of the mobile communication system may not be released in order to enable a fast setup of the downlink multicast or broadcast service at a later point in time.

In an exemplary variation of this embodiment, the establishment/reservation of system resources on the downlink distribution path between the access server and a radio access network of the mobile communication system is realized by establishing a multicast service context of the mobile terminal within a respective network entity in the downlink distribution path. If the service is soft-deactivated, the established context in a respective network entity is maintained and may be for example set to a stand-by state, so that the downlink multicast and broadcast service can late on restarted by simply reactivating the context. A context may be defined as a set of information, which is established in the network entities of the communication system for the purpose of defining system resources, which are to be used for the transmission of service data.

Returning to the exemplary embodiment related to the implementation of the ideas of the invention in a UMTS environment, the soft-deactivation may be implemented by bringing the MBMS UE context of a mobile terminal (here a UE) to stand-by state in the MBMS service entities.

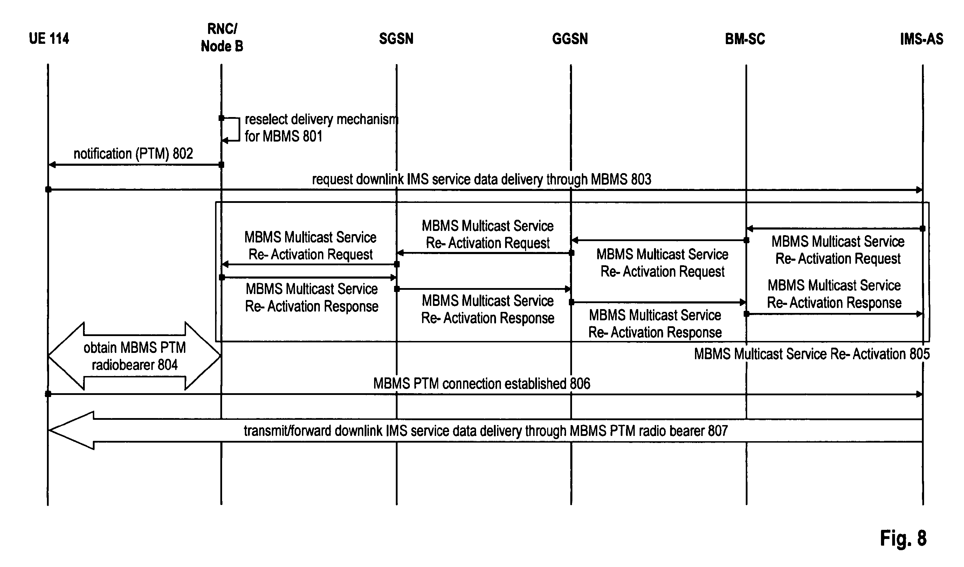

An exemplary state machine for the MBMS UE context according to an exemplary embodiment of the invention is shown in Fig. 8. According to standard MBMS, the MBMS context may be in two states, an active state and an inactive state.

The active state is typically entered upon MBMS Multicast Service Activation as described in 3GPP TS 23.246 (see version 6.9.0, chapter 8) that has been incorporated herein by reference. This procedure is for example triggered by reception of an IGMP JOIN message at the GGSN. The transit from active to inactive state is made upon performing the MBMS Multicast Service Deactivation procedure also described in 3GPP TS 23.246. In the active state a MBMS UE context is established in the network entities, while in inactive state the MBMS UE context is not present/deleted.

According to this embodiment of the invention, a new state, the stand-by state, is introduced. In this state the MBMB UE context is maintained in the network entities though the respective MBMS service is not delivered to the UE. This state may be entered upon performing a MBMS Multicast Service Soft-Deactivation procedure, in which the network entities are commanded to set the status of a MBMS UE context to hold, which would lead to no downlink MBMS data being addressed to the respective UE, though a context is available.

Upon MBMS Multicast Service Re-Activation, the MBMS UE context state returns to active which means that the network entity will forward the MBMS downlink data to the respective UE given that the MBMS Session Start procedure has been performed, i.e. MBMS data transmission has been started.

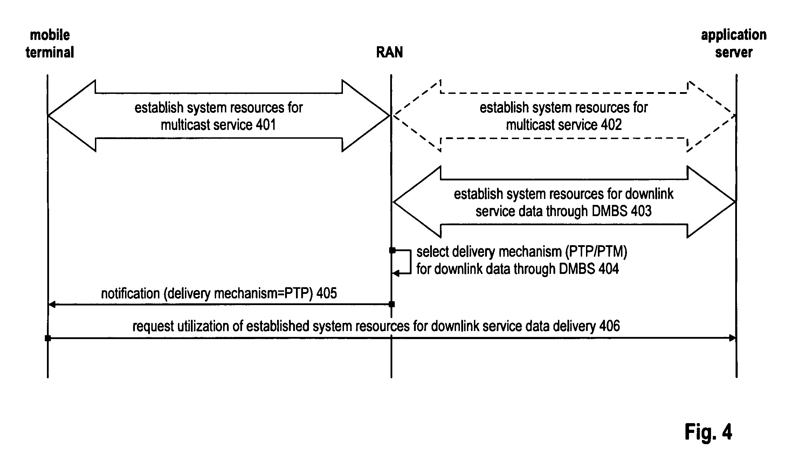

Next, an exemplary embodiment of the invention will be discussed with respect to Fig. 4. Fig. 4 shows the operations performed by an application server the radio access network (RAN) and a mobile terminal to receive a multicast service from the application server. In a first step, system resources for the multicast service are configured in the mobile communication network. This procedure includes the establishment 401 of a dedicated connection between the mobile terminal and the radio access network. This dedicated connection is to be used for the exchange of control signaling (which may also referred to as control plane data) related to the setup and control of the multicast service and is used for sending uplink service data from the mobile terminal to the application server for relaying same to the other service participants. As will be explained in further detail below, the dedicated connection established for the multicast service may optionally be used for downlink multicast service data. Uplink and downlink multicast service data may also be referred to as user plane data of the multicast service.

Optionally, depending on the multicast service it may also be necessary to establish 402 resources for the multicast service in the network (core network) connecting radio access network and the application server. For this purpose tunnels may for example be set up between the different network entities in the downstream distribution path of the control plane data and user plane data between application server and the radio access network. The application server may be either located in the core network or in another operator's domain and provides or relays the multicast service.

Next, a downlink multicast or broadcast service may be setup in order to provide the downlink data of the multicast service to the mobile terminal (and optionally other service participants within the radio cell where the mobile terminal is located).

Generally, the use of a downlink multicast or broadcast service (DMBS) to provide the multicast service may be a default configuration for providing multicast services to participants (i.e. is mandatory for multicast services) or its use may be optionally decided on a service-by-service basis, e.g. based on certain policies, QoS requirements of the multicast service, the number of user to participate in the multicast service, etc. The decision could for example be made by the application server or another network element in the core network of the mobile communication system. It is important to recognize that the decision should be made by a network entity of the core network, since it typically has information whether a downlink multicast or broadcast service is available within the mobile communication system and may obtain the appropriate information to decide on the use of the downlink multicast or broadcast service.

In this exemplary embodiment, the downlink multicast or broadcast service is to be used for delivering the downlink data of the multicast service to the mobile terminal. Hence, in the next step is to establish 403 system resources in the network entities in the downlink distribution path between application server and radio access network. For example, this resource establishment procedure could be realized by a signaling procedure between the network entities on the distribution path (including the application server and the radio access network entity controlling the radio resources) that establishes a context in at least a part of these entities context specifying a set of information for the purpose of defining system resources, which are to be used for the transmission of downlink multicast service data.

The radio access network, may next decide on and select the delivery mechanism that should be used for the downlink multicast or broadcast service between mobile terminal and radio access network. Generally, there are two options. First, the downlink multicast or broadcast service could use a point-to-point connection to the mobile terminal. This point-to-point connection may for example be a dedicated channel or dedicated radio bearer allowing for bidirectional communication. Alternatively, a point-to-multipoint connection that could be for example a shared or common channel or radio bearer may be utilized for providing the downlink user plane data of the multicast service to the mobile terminal(s) through the downlink multicast or broadcast service.

The network entity to decide the distribution strategy may for example depend on the radio access network architecture. According to one exemplary embodiment of the invention, the decision is made by a network entity of the radio access network that is controlling air interface resources. This could for example be the RNC in a standard UMTS network that is controlling the air interface resources of the cells served by its attached Node Bs. In other advanced architectures, the radio resource control function is located in the base stations so that the selection can be made on a radio-cell basis for the respective radio cells controlled by an individual base station. In an alternative embodiment of the invention, the decision on the distribution mechanism of the downlink multicast or broadcast service on the radio access can be made by any network entity in the mobile communication system that has sufficient information available or is provided with same for making the decision.

A radio bearer may be defined as a logical connection between an entity in the radio access network controlling radio resources and one or a plurality of user terminals. Furthermore, the radio bearer may be dedicated (dedicated radio bearer or dedicated connection), in which case a point-to-point (PTP) connection is established to the one user terminal. Alternatively, the radio bearer may be a point-to-multipoint (PTM) connection (shared radio bearer or shared connection), wherein the radio bearer may be shared by a plurality of user terminals in the same radio cell.

The decision may for example be based on at least one of the number of participants to receive the multicast service in a radio cell, the radio resource utilization in the respective radio cells (cell load, interference level, availability of resources, etc.), QoS requirements, established policies by the operator, etc.

Upon having decided 404 which delivery mechanism to use for the downlink multicast or broadcast service, the result of the decision is provided to the mobile terminal. This is accomplished by sending a notification including the decision to the mobile terminal.

In the example illustrated in Fig. 4 it is however assumed that a point-to-point connection has been selected for providing the downlink user plane data of the multicast service to the mobile terminal through the downlink multicast or broadcast service. Hence, the notification transmitted 405 to the mobile terminal will indicate this decision to the mobile terminal.

The mobile terminal will proceed with service setup depending on the notification. If a point-to-multipoint connection is to be used, the mobile terminal may obtain the RAN parameters necessary to receive the downlink data through the downlink multicast or broadcast service. If the use of a point-to-point connection is indicated in the notification, the mobile terminal will transmit 406 a request to the application server. This request will ask the application server to utilize the system resources that have been previously established for the multicast service (see steps 401 - and step 402 if performed) for the transmission of downlink multicast service data to the mobile terminal. Hence, in case a point-to-point connection is to be used for the transmission of the downlink service data using the downlink multicast or broadcast service, the setup of additional resources between radio access network and mobile terminal for the downlink multicast or broadcast service is prevented and the system resources including the point-to-point connection that have already been established for the multicast service data is used for transmission of the downlink service data.

As a further option, the application server may also trigger the deactivation of the downlink multicast or broadcast service which will release the system resources configured in steps 403.

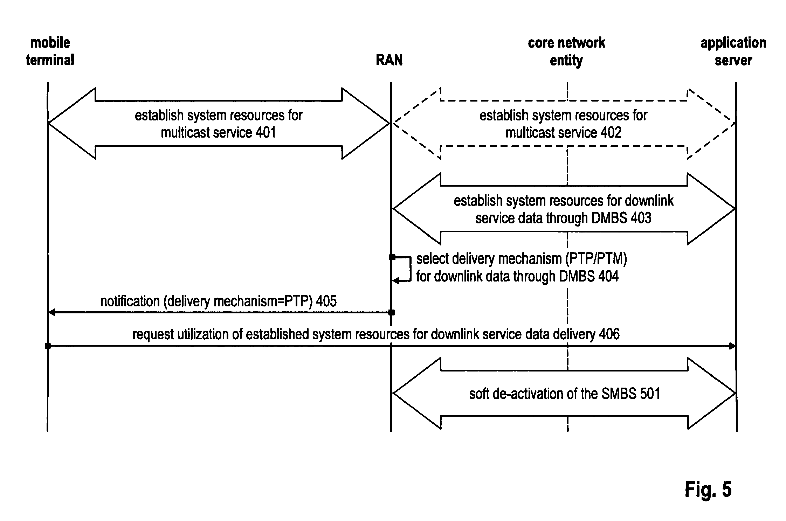

Fig. 5 shows advanced operations performed by an application server the radio access network (RAN) and a mobile terminal to receive a multicast service from the application server according to another embodiment of the invention. The operations in Fig. 5 are essentially identical to those in Fig. 4. In the embodiment shown in Fig. 5, the request transmitted 406 to the application server will not only trigger the utilization of the system resources established for the multicast service data as explained above, but - in addition - will also trigger a soft-deactivation of the downlink multicast or broadcast service within the network. In particular, the system resources that have been set up in step 403 for the downlink multicast or broadcast service are soft-deactivated. As outlined above, the reservation of the system resources may establish a service context for the mobile terminal in the network entities on the downstream distribution path between application server and radio access network. Typically these contexts will be deleted if the service is deactivated. In this embodiment, the system resources for the downlink multicast or broadcast service are not released, but marked as being on stand-by for optional later use. With respect to the contexts in the network entities (at least one) along the downlink distribution path of the downlink multicast or broadcast service this could for example mean that they are marked as being in hold state, i.e. that the mobile terminal would require or is assigned the system resources in case of utilizing the downlink multicast or broadcast service, but the downlink multicast or broadcast service not being active at present.

The soft deactivation of system resources according to an exemplary and more detailed embodiment will be explained in the following. In this exemplary embodiment the implementation of the ideas in a UMTS network providing an MBMS service as a downlink multicast or broadcast service is assumed. The establishment of system resources in step 403 would mean in this case that the MBMS Multicast Service Start procedure is performed which will inter alia establish a MBMS UE context in the core network nodes and the RNC. The MBMS UE context according to this embodiment of the invention may have the following content (please note that the parameters present in the context will depend on the network entity maintaining the context):

| **Parameter** | **Description** |
|---|---|
| IP multicast address | IP multicast address identifying an MBMS bearer that the UE has joined. |
| Access Point Name (APN) | Access Point Name on which this IP multicast address is defined. |
| GGSN Address in use | The IP address of the GGSN currently used. |
| SGSN Address | The IP address of the SGSN. |
| TMGI | Temporary Mobile Group identity allocated to the MBMS bearer. |
| Linked NSAPI | Network Service Access Point Name of the PDP context used by the UE to carry IGMP/MLD signalling. |
| IMSI | International Mobile Station Identity identifying the user. |
| TI | Transaction Identifier |
| MBMS_NSAPl | Network Layer Service Access Point Identifier which identifies an MBMS UE context. |
| Context State | Active / Inactive / Stand-By |

As can be seen in table above, a new parameter referred to as the "Context state" is introduced. If the context state is set to active this means that the UE is to receive MBMS data and thus the network entity will forward the MBMS data to the next downstream entity. If the context state is inactive the MBMS UE context is deleted, i.e. the MBMS service has been stopped for the UE so that system resources are freed.

In stand-by state context has been soft-deactivated. This means that the network entity will maintain the context information but the mobile terminal is currently not receiving the MBMS service identified by the IP multicast address. Hence, the network entity will only forward MBMS service data related to the MBMS service identified by the IP multicast address if there is at least one MBMS UE context in active state for the MBMS service identified by the IP multicast address.

Next, an embodiment that exemplarily uses the ideas and aspects of the invention above in a more specific UMTS based implementation will be outlined. In this example, an IMS multicast service is to be provided to a group of participants through an enhanced UMTS network that allows the use of MBMS services for providing the downlink user plane data of the IMS service to the users - i.e. allows the use of an IMS over MBMS service.

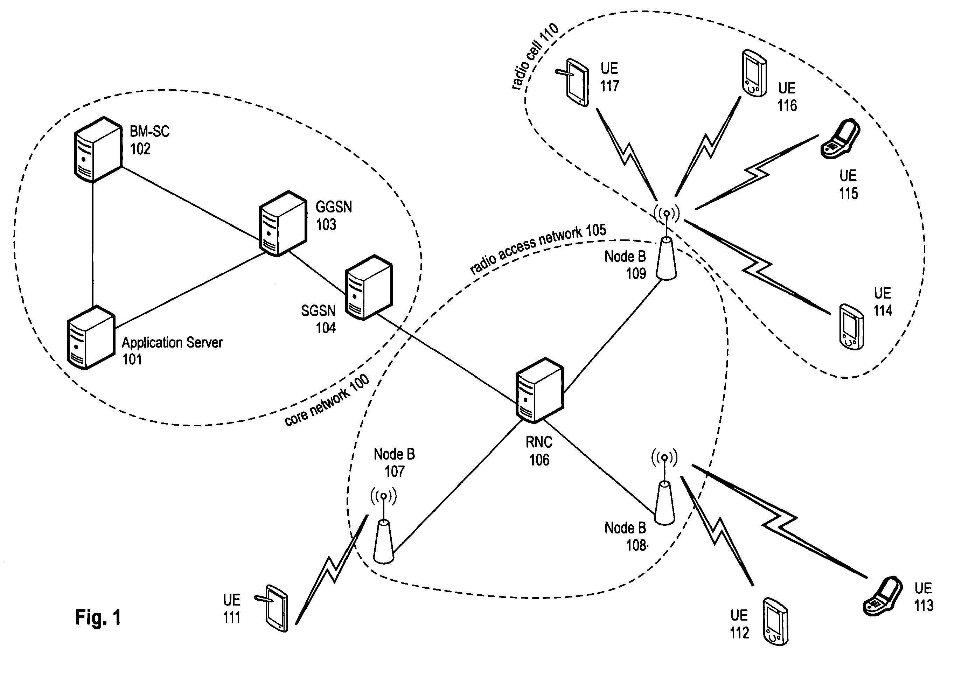

Before discussing the service operation in more detail, an architectural overview of the exemplary enhanced UMTS network is provided. Fig. 1 exemplarily illustrates an enhanced UMTS network with a number of users located in different radio cells of the radio access network according to an embodiment of the invention. The network may be separated into a core network 100 and a radio access network 105. The core network (CN) 100 comprises, a GGSN 103 as the gateway to the application server 101 and the BM-SC 102 as well as one or more SGSNs 104. The IMS application server 101 is implemented as an application server of the lP Multimedia Subsystem (IMS), and the Broadcast Multicast - Service Center (BM-SC) 102 of the MBMS architecture are part of the operator's IP backbone. It should be noted that application server 101 and BM-SC 102 are considered core network entities in this example.

The SGSN 104 connects the core network to one or more Radio Network Controllers (RNCs) 106 that each serves a so called radio network subsystem. The RNC 106 is typically responsible for the management of air interface resources of the mobile terminals (UEs) within the radio cells of base stations (Node Bs) controlled by the RNC 106. For this purpose a so called Radio Resource Control (RRC) protocol is utilized. In this example, the RNC 106 is assumed to control the three Node Bs 107, 108 and 109 which may each control one ore more radio cells. For example, Node B 109 provides radio connectivity within its radio cell 110 to UEs 114 to 117. Node B 108 serves UEs 112 and 113 and Node B 107 serves UE 111.

It should be noted that the invention is not limited to being used in the architecture described with respect to Fig. 1. Recently, for example, architectures have evolved in which the core network only comprises a gateway and the radio access network consists of an enhanced Node B(s) only. The RNC functions have been distributed to the gateway and the enhanced Node B(s) in these architectures. Nevertheless, the invention is also applicable to those enhanced and other architectures. Further, it should also be noted that the individual entities in a UMTS network (except for the UEs) are functional entities. This implies that several entities could for example be collocated in one physical network element, e.g. application server 101 and BM-SC 102 could be located in one single network element.

In this embodiment, it is assumed that UE 111 initiates an IMS service to users 112 to 117 in the network. In order to establish an IMS session all UEs 111 to 117 that are to participate in the IMS call require lP connectivity to the UMTS network (i.e. access to packet-switched services is needed).

To be able to receive a packet-switched service (PS service) like IMS a UE may typically perform a GPRS Attach procedure first. The GPRS Attach procedure registers the UE with the packet-switched core network (PS CN) domain (more precisely with its serving SGSN 104). During GPRS Attach procedure, the UE may provide its identity (e.g. IMSI) and service requirements to the SGSN 104 and will be authenticated and authorized by the network.

In addition to registering the UE with an SGSN 104, a successful GPRS Attach may optionally also establish a Mobility Management Context on the UE, in the RAN 105 (e.g., on the RNC 106), and on the SGSN 104 so as to allow the RAN 105 and the SGSN 104 to track the UE's location.

Moreover, the GPRS Attach may also establish a signaling connection between the UE and the SGSN 104. The UE and the SGSN 104 use this signaling connection to exchange signaling and control messages needed to perform the GPRS Attach procedure. After GPRS Attach is completed, the UE may continue to use this signaling connection to exchange signaling messages with the SGSN, for example, to perform PDP context activation.

The GPRS Attach procedure alone does not establish any Radio Access Bearer or CN Bearer for the UE. Therefore, GPRS Attach alone is not sufficient to enable a UE to send or receive user packets over the packet switched core network.

In order to obtain access to packet-switched services like an IMS service a PDP Context Activation and RAB (Radio Access Bearer) Establishment procedures are performed. A UE can request the network to establish and activate a PDP context for its PDP address after the UE has performed GPRS Attach successfully. A successful PDP Context Activation will also trigger the PS CN domain to establish the CN Bearer and the Radio Access Bearer (i.e., the lu Bearer and the Radio Bearer) that will transport user packets to and from the UE. After a successful PDP context activation, a mobile will be able to send and receive user packets over the PS CN domain.

Next, for receiving an IMS service, the UE may further need to register with IMS. When a UE wishes to use the IP-based real-time voice or multimedia services provided by the IMS, the UE needs to perform registration with the IMS. For example, the SIP signaling protocol may be used to register (SIP registration procedure) a user to register with the IMS.

For further details on the procedures above it is referred to J. Cheng Cheng, T.Zhang, "IP-Based Next-Generation Wireless Networks: Systems, Architectures, and Protocols", Wiley-Interscience, 2004, chapter 2.1 and chapter 4.3, incorporated herein by reference.

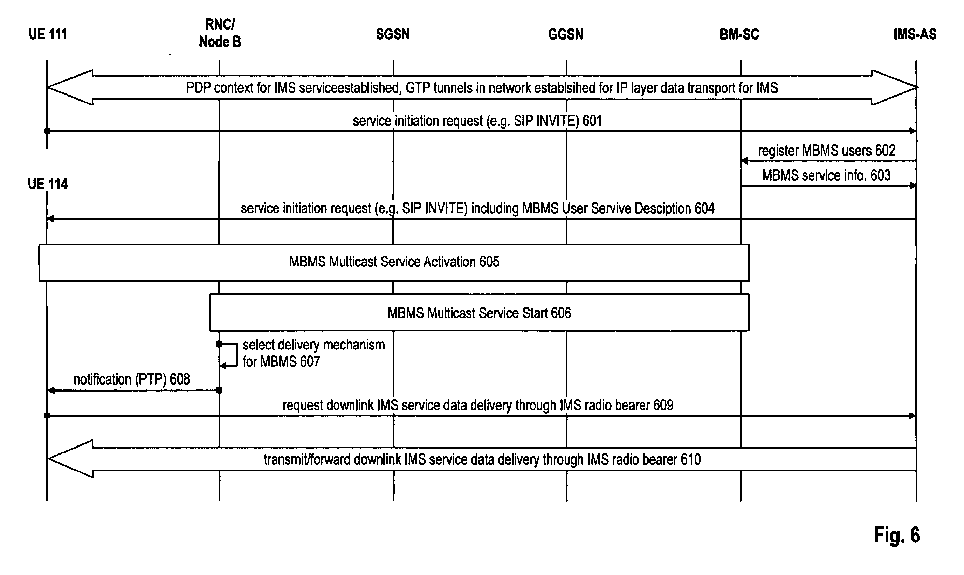

In this embodiment it is assumed that the service participants have performed all necessary procedures required to initiate or to participate in an IMS service, for example by performing the procedures briefly discussed above. The IMS service setup procedure according to an exemplary embodiment of the invention will be outlined under reference to Fig. 6 in the following.

To initiate an IMS multicast service, UE 111 sends 601 a service initiation request to the application server (IMS-AS) 101. For this purpose the SIP signaling protocol may for example be used. In this protocol a SIP INVITE is typically sent to initiate a session. The service initiation request includes the identities to the service participants that are to participate in the service. This may for example be accomplished by adding the SIP URI of the users to the SIP INVITE message.

The IMS-AS decides next to utilize a MBMS service to deliver the IMS multicast service data on the downlink to the service participants indicated in the service initiation message (here, for exemplary purposes UEs 112 to 117). The use of MBMS for the downlink IMS data may for example be mandatory or optimally selected by the IMS-AS. Further the decision to use MBMS may optionally be made per radio cell or radio network subsystem based on the information on the service participants.

As a next step, the IMS-AS registers 602 the service participants (e.g. UEs 114 to 117) that should use the downlink IMS service data through MBMS at the BM-SC 102. In response to the registration, the BM-SC 102 provides 603 the IMS-AP 101 with multicast service information related to the MBMS service that will carry the downlink IMS service data. This multicast service information includes at least the lP multicast address of the MBMS service that will carry the downlink IMS service data.

Next the IMS-AS invites the other service participants to the IMS service. When using SIP signaling, a SIP INVITE is transmitted to the UEs 112 to 117. In case a UE is to utilize a MBMS for downlink IMS service data delivery the invitation to the service may comprise MBMB User Service Description (MBMS USD) that also includes the IP multicast address of the MBMS service that will carry the downlink IMS service data.

The reception of the service invitation at the UE 114 (which is supposed to receive the downlink MBMS service data through an MBMS service) triggers 605 MBMS multicast service activation process (UE sends IGMP Join with the IP multicast address of the MBMS service obtained from the MBMS USD, authorization of the UE 114, MBMS context activation, etc.). This procedure will reserve the resources in the core network entities and RNC by establishing a MBMS UE context for the service as illustrated above in the respective network entities. The MBMS Multicast Activation Start procedure is essentially the same as defined in 3GPP TS 23.246, version 6.9.0, section 8.2, incorporated herein by reference, except for adding the Context State parameter to the MBMS UE contexts so as to be able to soft-deactivate the MBMS service as will be explained below. When setting um the MBMS UE contexts during the MBMS Multicast Service Start procedure according to this embodiment of the invention, the Context State will be initially set to active. In this step 605 a standard MBMS Multicast Service Activation procedure as for example detailed in 3GPP TS 23.246, version 6.9.0, section 8.2, incorporated herein by reference may be performed.

Subsequently, the network will continue 606 with the execution of an MBMS Multicast Service Start procedure. In this step 606 a standard MBMS Multicast Service Start procedure as for example detailed in 3GPP TS 23.246, version 6.9.0, section 8.3, incorporated herein by reference may be essentially performed except for the RAN resource reservation that is modified in this exemplary embodiment as described below.

At the end of the MBMS Multicast Service Start procedure the RAN resources are to be established by the RNC for UE 114. In this procedure, the RNC 106 controlling the air interface resources of Node B 109 serving UE 114 may decide 607 whether a point-to-point radio bearer or a point-to-multipoint radio bearer is to be used to deliver the IMS service data provided via MBMS to the UE 114. The decision on may for example be based on the number of users that are to receive the same IMS service data through the MBMS in a cell, the cell load, QoS requirements, etc.

If the RNC 106 would decide to use a point-to-multipoint radio bearer (shared channel) within radio cell 110 to provide the IMS service data through the MBMS service to UEs 114 to 117, the RNC 106 may inform the UEs 114 on the decision and UE 114 will receive the IMS service data through a point-to-multipoint connection of the MBMS service. The information on the selected delivery mechanism for MBMS may for example be transmitted periodically by radio access network to inform all UEs about the decision.

This information may for example be provided to the UE 114 in a RRC message called MBMS Modified Services Information that is sent on the multicast control channel (MCCH or DCCH) from UTRAN to UE. This RRC includes an Information Element "MBMS required UE action" that would be set to "Acquire PTM RB" (acquire point-to-multipoint radio bearer). After receiving this RRC message UE 114 may listen to the information on the control channel (MCCH) that is broadcast on the radio cell about the characteristics of the radio bearer (e.g. transport channel and/or physical channel parameters), and tune its receiver to the indicated channel.

When deciding to use a point-to-point connection for delivering the IMS service data through MBMS to UE 114 (which is assumed in this exemplary embodiment), the radio access network (e.g. the RNC 106) will inform 608 UE 114 on this decision.

For example, the RRC message "MBMS Modified Services Information" may be used for this purpose. The Information Element "MBMS required UE action" may be set to "Request PTP RB" (request point-to-point radio bearer), which would normally trigger the UE 114 to establish a (second - in addition to the IMS radio bearer) dedicated radio bearer to the radio access network for receiving the downlink IMS service data through MBMS.

According to this embodiment of the invention, instead of establishing the point-to-point connection as requested, the UE 114 will send 609 a request message to the IMS AS (application server 101) requesting the IMS AP to forward the downlink IMS service data for UE 114 through the radio bearer that has been initially set up for the IMS service. In response to the request form UE 114 the IMS AS will redirect the downlink IMS service data through the system resources established in the network for the IMS service.

In the example outlined above and according to a further embodiment of the invention, the notification (see step 608) on the selected MBMS delivery mechanism may be a RRC message, i.e. a message of the access stratum protocols of UMTS, while the request (see step 609) to the application server 101 may be a newly defined SIP message, i.e. a message of a non-access stratum protocol. In order to trigger the transmission of a non-access stratum message by the access stratum, a service primitive containing an Information Element with the radio bearer type information (i.e. PTP or PTM as indicated in the notification from the radio access network) is passed to non-access stratum. For this purpose a SAP service access point at the border between access stratum and non-access stratum (e.g. UM or DC-SAP) could be utilized.

Another option may be to use the access-stratum message as a trigger and then generate a different dedicated message from access stratum to non-access stratum application and trigger the transmission 609 of the request to the application server. This access stratum-non-access stratum interaction that is triggered by the MBMS required UE action information element is also used in other instances to trigger the UE to request RRC or PMM connection.

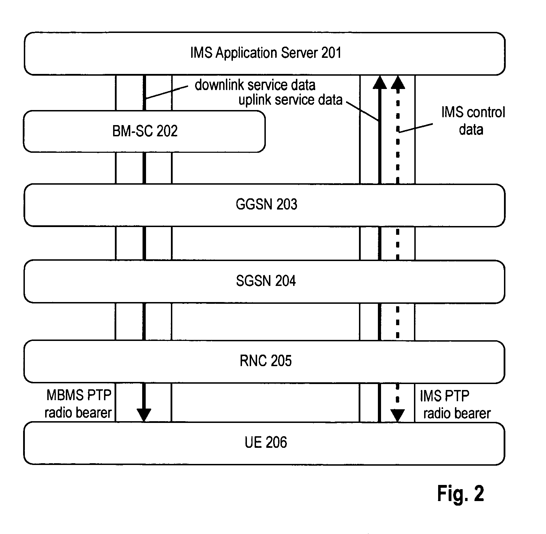

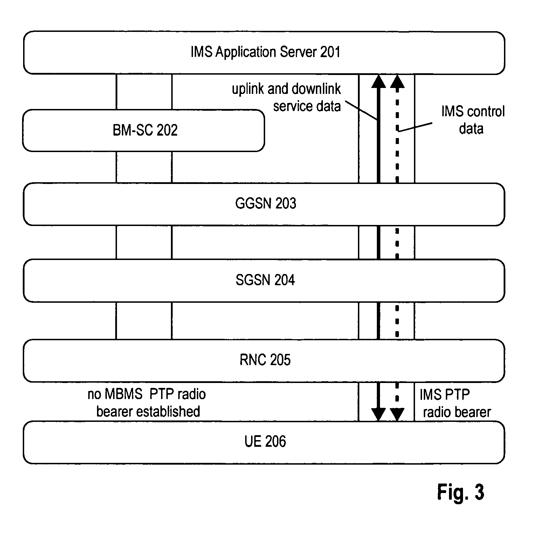

The benefit obtained by the operations as described with reference to Fig. 6 in comparison to state-of the art solutions when using a point-to-point connection on the air interface may be seen by comparing Fig. 2 and Fig. 3. Fig. 2 shows the established system resources in case of a standard operation of an IMS over MBMS service in case a point-to-point connection is used in the radio access network. As can be seen on the right-hand side of Fig. 2, IMS resources are first setup between the IMS Application server 201 and the UE 206 that caries the uplink and downlink control signaling of the IMS service (e.g. SIP signaling) and the uplink IMS data from the UE 206 to be relayed to the other service participants. As explained above, a PDP context reserving the required IMS system resources in the network is established for this purpose and an air interface resources are reserved and configured (IMS PTP radio bearer). The IMS PTP radio bearer does not carry the downlink IMS service data, as same are provided to MBMS system resources to the UE 206. These MBMS system resources require the establishment of a second (bidirectional) point-to-point connection on the air interface (MBMS PTP radio bearer) that is only utilized for downlink data.

As can be seen in Fig. 3, according to the embodiment of the invention described with reference to Fig. 6 above, the establishment of the second point-to-point connection, i.e. the configuration of a MBMS PTP radio bearer can be prevented, as the downlink IMS service data are routed through the IMS system resources.

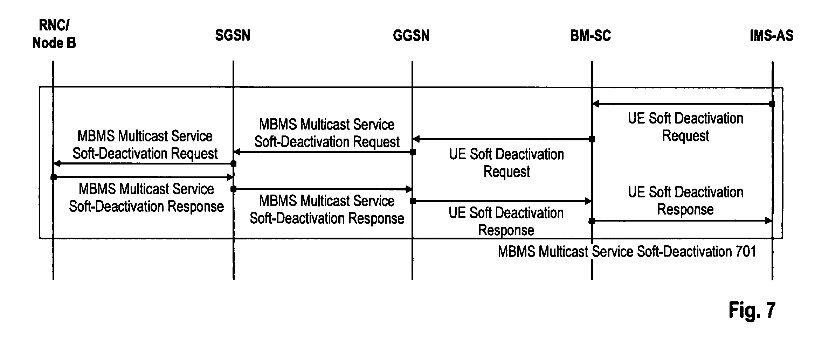

As indicated previously the MBMS system resource established on the downstream distribution path in the network may be soft-deactivated according to another embodiment. Fig. 7 shows an exemplary soft-deactivation procedure according to this embodiment of the invention.

The reception 609 of the request for downlink IMS service data delivery through IMS system resources or upon another trigger message received from the UE 114, the application server 101 (IMS AS) may initiate the initiate soft-deactivation of the MBMS resources. This may be for example done by sending a UE soft deactivation request to the BM-SC 102 that indicates the UE for which the MBMS UE contexts should be brought into stand-by state. This could prompt the IMS AS to send a non-access stratum message (e.g. Hold or Pause) to the GGSN or BM-SC on behalf of the UE similar to the IGMP Leave message with the identity of the UE (e.g. the IP address of the UE) to identify which context is to be put on stand-by state. If the request is sent to the BM-SC 102 then the BM-SC 102 will forward an appropriate request (UE Soft Deactivation Request) to the next downstream entity, the GGSN 103 which will set the appropriate MBMS UE context to hold state and forwards the soft-deactivation request (MBMS Multicast Service Soft-Deactivation Request) to the SGSN 102. All network entities receiving the request will set the MBMS UE context of the indicated UE to stand-by state and (optionally) response messages may be returned upstream from RNC 106 to the application server 101 (IMS AS).

Alternatively, the request to utilize IMS resources for downlink and to trigger a soft-deactivation process may also be requested by the UE 114 by means of modified IGMP Leave message to the GGSN 103 similar to the standard MBMS Multicast Service De-activation procedure. In response to the message, the GGSN 103 may then proceed with the soft-deactivation in a process similar to the procedure described with reference to Fig. 7 above. In addition, the GGSN 103 may also notify the IMS AS about the UE 114 requesting to receive downlink data through the IMS bearer.

Another embodiment of the invention relates to switching of the delivery mechanism for the downlink multicast or broadcast service from point-to-point to point-to-multipoint. The radio access may reevaluate from time to time or event triggered, whether to still use the point-to-point connection for a particular user or whether to switch to a point-to-multipoint connection in the radio access network to deliver the downlink multicast data through the downlink multicast or broadcast service to a user. If a switch of the delivery mechanism is decided, the mobile terminal is notified on the decision similar to the procedure described with reference to Fig. 5. The mobile terminal may next acquire the point-to-multipoint connection to be used and may request the application server to re-activate the system resources for the downlink multicast or broadcast service in the network that are in stand-by state. Thereupon, the application server may forward the downlink multicast service data through the downlink multicast or broadcast service to the mobile terminal.

An exemplary implementation of the switching of the delivery mechanism in a UMTS network according to a further embodiment of the invention will be described in the following with respect to Fig. 8. Initially, UE 114 uses the IMS point-to-point connection for receiving the downlink IMS service data and the MBMS system resources are soft-deactivated (i.e. MBMS UE Contexts are in stand-by state). The RNC 106 decides 801 to use a point-to-multipoint connection for providing the downlink IMS service data through MBMS to UE 114 and informs 802 UE 114 on the decision by similar means as described with reference to Fig. 6 (see step 608) above.

After receiving the notification from the radio access network indicating to aquire a PTM connection (for example by means of the "Acquire PTM RB info" command in a RRC message) the UE will listen to the information on the control channel (e.g. MCCH) that is broadcast on the radio cell about the characteristics of the radio bearer (e.g. transport channel and/or physical channel parameters), and tune its receiver to the indicated channel.

In order to inform the application server 101 (IMS AS) that it should route the downlink IMS service data through the MBMS resources (instead of the IMS resources), UE 114 sends 803 a request to the application server 101 (IMS AS). In response to this request, the application server 101 (IMS AS) will initiate the reactivation of the MBMS system resources in the network (MBMS Multicast Service Re-Activation procedure 805).For example, this may be accomplished by sending a new defined MBMS Multicast Service Re- Activation Request from the application server 101 (IMS AS) downstream to the RNC 106 that indicates the UE 114 for which the MBMS UE Context should be transited from stand-by to active state. Further, the reactivation of the MBMS UE Contexts is confirmed in appropriate response messages so as to inform the application server 101 (IMS AS) on the time at which the MBMS system resources are re-established.

If other UEs in the cell of UE 114 already receive the downlink IMS service data through an ongoing MBMS service, the reactivation will only have the effect of changing the MBMS UE Contest state, but will have no effect on the ongoing distribution of the downlink IMS service data through the point-to-multipoint connection in the radio cell, as same are already provided via an existing point-to-multipoint connection to the other UEs.

However, in this case the response message indicating the reactivation of MBMS resources will indicate to the application server 101 (IMS AS) that it may now switch routing of the downlink IMS service data via the IMS resource to its delivery through the MBMS service. In this case, it is thus assumed that UE 114 already managed to acquire access on the point-to-multipoint connection of the MBMS service in its cell. Due to the signaling delays inherent to the MBMS Multicast Service Re-Activation procedure 805 described above, this may be a valid assumption by the application server 101 (IMS AS), so that the application server 101 (IMS AS) may indeed switch to the MBMS service for providing 807 the downlink IMS service data to UE 114 upon receiving the confirmation that the MBMS UE Contexts for UE 114 are in active state again.

In a variant of this embodiment, UE 114 may send 806 another signaling message to the application server 101 (IMS AS) so as to inform the application server 101 (IMS AS) that it has now access to the MBMS point-to-multipoint connection. Hence, in this variant the application server 101 (IMS AS) will route 807 the downlink IMS service data trough the MBMS resources upon having received both, the signaling message of UE 114 in step 806 and the confirmation that the MBMS UE Contexts for UE 114 are in active state again.

Another embodiment of the invention relates to switching from a point-to-multipoint connection for delivery of the downlink multicast data through the downlink multicast or broadcast service to a point-to-point connection, where the multicast resources are used only on the air interface and the downlink multicast or broadcast service may be optionally soft deactivated. This procedure is essentially similar to that shown in Fig. 4 or Fig. 5. Upon receiving the notification from the radio access network that now a point-to-point connection instead of a point-to-multipoint connection is to be used, the mobile terminal will inform the mobile terminal will perform send 406 the request to the application server that may then provide the downlink multicast data through the system resources including the point-to-point connection that have been established for the multicast service. In addition the mobile terminal may further release the air interface resources for the point-to-multipoint connection that has been used so far for the delivery of the downlink multicast data through the downlink multicast or broadcast service. Furthermore, the system resources of the mobile terminal for the downlink multicast or broadcast service may be soft deactivated as described above.

Another embodiment of the invention relates to cases where a mobile terminal is not capable of receiving both services at the same time so it needs to select one or the other upon notification. The mobile terminal thus can not receive the downlink multicast or broadcast service (e.g. MBMS service) at the same time as the multicast service (e.g. IMS service) is called. Due to the cell conditions it may be ordered by the network to go to PTM connection. The mobile terminal may use the notified PTM connection (e.g. being indicated by the MBMS UE action RRC information element set to "Acquire PTM RB information") and may request the IMS AS to not send data to it through the downlink multicast or broadcast service (e.g. MBMS service) but using the existing bearer that is used for the multicast service (e.g. IMS service).

If the mobile terminal is notified to use a PTP connection (e.g. by setting the MBMS UE action RRC information element to "Acquire PTP RB information") then it may also request the IMS AS to not send data to it through the downlink multicast or broadcast service (e.g. MBMS service) but using the existing bearer that is configured for the multicast service (e.g. IMS service).

This notification may be made in form of a RRC message that is used for MBMS services. The RRC message will also serve as indicator to the UE that an MBMS service is going to be setup. Hence the UE that cannot receive both services at the same time will request to receive the data through the existing service.

Another embodiment of the invention relates to the implementation of the above described various embodiments using hardware and software. It is recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

## Claims

1. A method for providing a multicast service from or via an application server to at least one mobile terminal within a mobile communication system, wherein the mobile communication system provides a downlink multicast or broadcast service that can be utilized for transmitting the downlink data of the multicast service to the mobile terminal, the method comprising the following steps performed by the mobile terminal:
establishing system resources for the multicast service including at least a dedicated connection between the mobile terminal and a radio access network of the mobile communication system for exchanging data of the multicast service,
receiving from the radio access network a notification on whether the downlink multicast or broadcast service is to utilize a point-to-point connection or a point-to-multipoint connection for providing downlink data of the multicast service to the mobile terminal, and
if the mobile terminal is notified that a point-to-point connection is to be utilized, requesting the application server to utilize the established system resources for providing the downlink data of the multicast service to the mobile terminal.

2. The method according to claim 1, further comprising the step of receiving the downlink data of the multicast service through a point-to-multipoint connection from the radio access network utilizing the downlink multicast or broadcast service, if the mobile terminal is notified that a point-to-multipoint connection is to be utilized.

3. The method according to claim 1 or 2, wherein the point-to-point and point-to-multipoint connection is an air interface connection.

4. The method according to claim 1 or 2, wherein the notification received at the mobile terminal is a message of an access stratum protocol.

5. The method according to claim 3, wherein the access stratum protocol is a radio resource control protocol.

6. The method according to claim 1 or 2, wherein the notification received at the mobile terminal is a message of a non-access stratum protocol.

7. The method according to one of claims 3 to 5, wherein the application server is requested to utilize the established system resources by a non-access stratum protocol message transmitted by the mobile terminal.

8. The method according to claim 5, further comprising the step of triggering within the mobile terminal the transmission of the non-access stratum protocol message by an access stratum protocol entity receiving the notification through a service access point for exchanging data between non-access stratum protocol and the access stratum protocol.

9. A method for providing a multicast service from or via an application server to at least one mobile terminal within a mobile communication system, wherein the mobile communication system provides a downlink multicast or broadcast service that can be utilized for transmitting the downlink data of the multicast service to the mobile terminal, the method comprising the steps of:
establishing system resources for the multicast service including at least a dedicated connection between the mobile terminal and a radio access network of the mobile communication system for exchanging data of the multicast service,
establishing system resources on a downlink distribution path between the access server and a radio access network of the mobile communication system for providing the downlink data of the multicast service utilizing the downlink multicast or broadcast service to the mobile terminal,
deciding within a network entity of the radio access network, whether the downlink multicast or broadcast service is to utilize a point-to-point connection or a point-to-multipoint connection for providing downlink data of the multicast service to the mobile terminal, and
notifying the mobile terminal on the decision.

10. The method according to claim 9, further comprising the step of performing a soft-deactivation of the established system resources on the downlink distribution path, if it has been decided to utilize a point-to-point connection.

11. The method according to claim 10, wherein the soft deactivation is triggered by the application server in response to a request of the mobile terminal.

12. The method according to claim 10 or 11, wherein a multicast service context of the mobile terminal within a respective network entity in the downlink distribution path is maintained when performing soft-deactivation of the downlink multicast service.

13. The method according to one of claims 9 to 12, further comprising the step of receiving at the application server a request to utilize the established system resources for the multicast service including the dedicated connection for providing the downlink data of the multicast service to the mobile terminal.

14. The method according to claim 13, wherein the request is received by the application server from the mobile terminal or a network entity of the radio access network, if the network entity of the radio access network decided to utilize a point-to-point connection.

15. The method according to claim 13, wherein the request is comprised in a non-access stratum protocol message received by the application server from the mobile terminal.

16. The method according to one of claims 9 to 15, wherein the notification of the mobile terminal on whether the downlink multicast or broadcast service is to utilize a point-to-point connection or a point-to-multipoint connection is comprised within an access stratum protocol message transmitted by said network entity of the radio access network.

17. A mobile terminal within a mobile communication system for receiving a multicast service from or via an application server, wherein the mobile communication system provides a downlink multicast or broadcast service that can be utilized for transmitting the downlink data of the multicast service to the mobile terminal, the mobile terminal comprising:
a processing unit for establishing system resources for the multicast service including at least a dedicated connection between the mobile terminal and a radio access network of the mobile communication system for exchanging data of the multicast service,
a receiver for receiving from the radio access network a notification on whether the downlink multicast or broadcast service is to utilize a point-to-point connection or a point-to-multipoint connection for providing downlink data of the multicast service to the mobile terminal, and
a transmitter for requesting the application server to utilize the established system resources for providing the downlink data of the multicast service to the mobile terminal, if the mobile terminal is notified that a point-to-point connection is to be utilized.

18. The mobile terminal according to claim 17, further comprising means configured to perform the steps of the method according to one of claims 2 to 8.

19. A network entity of the radio access network of a mobile communication system for providing multicast service data to at least one mobile terminal within a mobile communication system, wherein the mobile communication system provides a downlink multicast or broadcast service that can be utilized for transmitting the downlink multicast service data of a multicast service to the mobile terminal, the network entity comprising:
a communication unit and a processing unit for establishing system resources for the multicast service including at least a dedicated connection between the mobile terminal and a radio access network of the mobile communication system for exchanging data of the multicast service,
wherein the communication and processing unit is operable to establish system resources on a downlink distribution path between the access server and the network entity for providing the downlink data of the multicast service utilizing the downlink multicast or broadcast service to the mobile terminal, and
wherein the processing unit is operable to decide, whether the downlink multicast or broadcast service is to utilize a point-to-point connection or a point-to-multipoint connection for providing downlink data of the multicast service to the mobile terminal, and
wherein the communication unit is operable to notify the mobile terminal on the decision.

20. A mobile communication system comprising a mobile terminal according to claim 17 or 18 and a network entity of the radio access network according to claim 19.

21. The mobile communication system according to claim 20, further comprising at least one further network element configured to perform the steps of the method according to one of claims 9 to 16.

22. A computer-readable medium storing instructions that, when executed by a processor of a mobile terminal, cause the mobile terminal to receive a multicast service from or via an application server, wherein the mobile communication system provides a downlink multicast or broadcast service that can be utilized for transmitting the downlink data of the multicast service to the mobile terminal, by:
establishing system resources for the multicast service including at least a dedicated connection between the mobile terminal and a radio access network of the mobile communication system for exchanging data of the multicast service,
receiving from the radio access network a notification on whether the downlink multicast or broadcast service is to utilize a point-to-point connection or a point-to-multipoint connection for providing downlink data of the multicast service to the mobile terminal, and
if the mobile terminal is notified that a point-to-point connection is to be utilized, requesting the application server to utilize the established system resources for providing the downlink data of the multicast service to the mobile terminal.

23. The computer readable-medium according to claim 22, further storing instructions that, when executed by the processor of the mobile, cause the mobile terminal to receive the multicast service by performing the steps of the method according to one of claims 1 to 8.

24. A computer-readable medium storing instruction that, when executed by a network element of the radio access network of a mobile communication system, cause the network element to provide multicast service data to at least one mobile terminal within a mobile communication system, wherein the mobile communication system provides a downlink multicast or broadcast service that can be utilized for transmitting the downlink multicast service data of a multicast service to the mobile terminal, by:
establishing system resources for the multicast service including at least a dedicated connection between the mobile terminal and a radio access network of the mobile communication system for exchanging data of the multicast service,
establishing system resources on a downlink distribution path between the access server and a radio access network of the mobile communication system for providing the downlink data of the multicast service utilizing the downlink multicast or broadcast service to the mobile terminal,
deciding whether the downlink multicast or broadcast service is to utilize a point-to-point connection or a point-to-multipoint connection for providing downlink data of the multicast service to the mobile terminal, and
notifying the mobile terminal on the decision.
